# EUROPÄISCHE PATENTANMELDUNG

(11) **EP 4 449 959 A1**
(43) Veröffentlichungstag der Anmeldung: **23.10.2024**
(21) Anmeldenummer: 23168718.7
(22) Anmeldetag: 19.04.2023
(51) Int. Cl.: A47J 43/07, A47J 36/32

(54) **KÜCHENMASCHINE ZUR TEILAUTOMATISIERTEN SPEISENZUBEREITUNG**

(71) Anmelder: Vorwerk & Co. Interholding GmbH, 42270 Wuppertal (DE)
(72) Erfinder: SCHULZE STRUCHTRUP, Sarah, 53121 Bonn (DE)
(74) Vertreter: Gille Hrabal Partnerschaftsgesellschaft mbB Patentanwälte

(57) **Zusammenfassung**

Die Erfindung betrifft eine Küchenmaschine (1) zum Zubereiten einer Speise (4) durch Verarbeiten mindestens eines Nahrungsmittels (9) umfassend ein Speisenzubereitungsgefäß (2), ein Heizelement (3) zum Erhitzen eines Nahrungsmittels (9) in dem Speisenzubereitungsgefäß (2), ein drehbares Werkzeug (5) zum Mischen und/oder Zerkleinern eines Nahrungsmittels (9) in dem Speisenzubereitungsgefäß (2) und einen Elektromotor (8) zum Rotieren des Werkzeugs (5), wobei eine Steuerungseinheit (6) vorgesehen ist, die Zugriff auf mindestens ein elektronisch gespeichertes Rezept (10) mit mehreren Rezeptschritten (11) für ein teilautomatisiertes Zubereiten einer Speise (4) mit der Küchenmaschine (1) hat, so dass die Steuerungseinheit (6) durch einen Rezeptschritt (11) der mehreren Rezeptschritte (11) des Rezeptes (10) veranlasst werden kann, das Werkzeug (5) und/oder das Heizelement (3) in einer durch den Rezeptschritt (11) definierten Weise zum Verarbeiten des mindestens einen Nahrungsmittels (9) zu betreiben. Die Steuerungseinheit (6) ist so konfiguriert, dass das mindestens eine Nahrungsmittel (9) vor einem Garvorgang zerkleinert wird. Der Energieverbrauch der Küchenmaschine für die Speisenzubereitung kann so gesenkt werden.

## Beschreibung

Die Erfindung betrifft eine Küchenmaschine zum Zubereiten einer Speise durch Verarbeiten mindestens eines Nahrungsmittels umfassend ein Speisenzubereitungsgefäß, ein Heizelement zum Erhitzen eines Nahrungsmittels in dem Speisenzubereitungsgefäß, ein drehbares Werkzeug zum Mischen und/oder Zerkleinern eines Nahrungsmittels in dem Speisenzubereitungsgefäß und einen Elektromotor zum Rotieren des Werkzeugs. Eine Steuerungseinheit ist vorgesehen, die Zugriff auf mindestens ein elektronisch gespeichertes Rezept mit mehreren Rezeptschritten für ein teilautomatisiertes Zubereiten einer Speise mit der Küchenmaschine hat, so dass die Steuerungseinheit durch einen Rezeptschritt der mehreren Rezeptschritte des Rezeptes veranlasst werden kann, das Werkzeug und/oder das Heizelement in einer durch den Rezeptschritt definierten Weise zum Verarbeiten des mindestens einen Nahrungsmittels zu betreiben.

Energiesparen tritt zunehmend in den Fokus.

Es ist Aufgabe der Erfindung, eine weiterentwickelte Küchenmaschine zur teilautomatisierten Speisenzubereitung bereitzustellen, die ein Reduzieren des Stromverbrauchs ermöglicht.

Zur Lösung der Aufgabe dient eine Küchenmaschine gemäß Anspruch 1. Vorteilhafte Ausführungsformen ergeben sich aus den Unteransprüchen.

Ein Aspekt zur Lösung der Aufgabe sieht eine Küchenmaschine zum Zubereiten einer Speise durch Verarbeiten mindestens eines Nahrungsmittels vor, die umfasst: ein Speisenzubereitungsgefäß, ein Heizelement zum Erhitzen eines Nahrungsmittels in dem Speisenzubereitungsgefäß, ein drehbares Werkzeug zum Mischen und/oder Zerkleinern eines Nahrungsmittels in dem Speisenzubereitungsgefäß und einen Elektromotor zum Rotieren des Werkzeugs. Ferner ist eine Steuerungseinheit umfasst, die Zugriff auf mindestens ein elektronisch gespeichertes Rezept mit mehreren Rezeptschritten für ein teilautomatisiertes Zubereiten einer Speise mit der Küchenmaschine hat, so dass die Steuerungseinheit durch einen Rezeptschritt der mehreren Rezeptschritte des Rezeptes veranlasst werden kann, das Werkzeug und/oder das Heizelement in einer durch den Rezeptschritt definierten Weise zum Verarbeiten des mindestens einen Nahrungsmittels zu betreiben.

Die Steuerungseinheit ist so konfiguriert, dass das mindestens eine Nahrungsmittel vor einem Garvorgang zerkleinert wird.

Der Stromverbrauch der Küchenmaschine kann auf diese Weise reduziert werden, insbesondere in Fällen, in denen das auszuführende, gespeicherte Rezept zunächst ein Garen und anschließend ein Zerkleinern eines Lebensmittels vorsieht, wobei ein Vertauschen dieser beiden Vorgänge zum gleichen Kochergebnis führt. Maßgeblich ist hier der Gedanke, dass eine Reduzierung der Oberfläche des Nahrungsmittels ein Garen mit geringerer Energiebereitstellung ermöglicht. Die Dauer des Garens und/oder die Temperatur für das Garen kann so reduziert und Energie eingespart werden, selbst wenn bei dem vorgezogenen Zerkleinerungsvorgang mit einer höheren Drehzahl zerkleinert wird oder während des Garens zum Zwecke einer effizienteren Wärmeeinbringung das Nahrungsmittel zusätzlich gemischt wird durch das Werkzeug.

Bestehende Rezepte sind nicht im Hinblick auf Energiesparen optimiert. Eine Steuerungseinheit, die so konfiguriert ist, dass das mindestens eine Nahrungsmittel vor einem Garvorgang zerkleinert wird, verändert folglich die Reihenfolge und/oder Verarbeitungsparameter der Rezeptschritte Garen und Zerkleinern. Insbesondere sind Veränderungen zum Rezept oder zu Rezeptschritten (wie in dieser Ausführungsform und anderen Ausführungsformen beschrieben) in einem hinterlegten Korrekturdatensatz bzw. Korrekturdatensätzen hinterlegt. Ein Verarbeitungsparameter ist insbesondere mindestens einer der Folgenden: eine Soll-Drehzahl des Werkzeugs, eine Dauer des Garvorgangs oder der Aktivierung des Heizelements bis zu dessen Deaktivierung, eine Soll-Temperatur des Heizelements während dessen Aktivierung zum Garen und/oder eine Soll-Drehzahl des Werkzeugs zum Mischen während eines Garvorgangs. Es ist möglich, dass eine Speise nur ein Nahrungsmittel enthält.

In einer Ausführungsform ist die Steuerungseinheit so konfiguriert, dass von den Rezeptschritten des Rezeptes abgewichen wird, damit einerseits das mindestens eine Nahrungsmittel vor einem Garvorgang zerkleinert oder mit einer höheren Drehzahl zerkleinert wird und andererseits der Garvorgang mit einer geringeren Gardauer oder Temperatur durchgeführt wird. Der Stromverbrauch der Küchenmaschine kann so reduziert werden. Abweichungen vom Rezept oder Rezeptschritten zum Zwecke des Energiesparens (wie in dieser Ausführungsform und anderen Ausführungsformen beschrieben) sind insbesondere in einem hinterlegten Korrekturdatensatz bzw. Korrekturdatensätzen definiert. Bevorzugt wird die im gespeicherten Rezept enthaltene Reihenfolge der Rezeptschritte mit einem Garvorgang und einem Zerkleinerungsvorgang nicht eingehalten, sondern durch die Steuerungseinheit verändert. Alternativ oder ergänzend wird vorzugsweise wird mindestens ein Verarbeitungsparameter im Vergleich zu den Vorgaben eines Rezeptschrittes wie oben erwähnt verändert. Der Stromverbrauch der Küchenmaschine kann so reduziert werden.

In einer Ausführungsform ist die Steuerungseinheit so konfiguriert, dass von den Rezeptschritten des Rezepts abgewichen wird, damit das mindestens eine Nahrungsmittel vor einem Garvorgang zerkleinert wird, wenn das Rezept vorsieht, ein Nahrungsmittels nach einem Garvorgang zu zerkleinern. Es kann auf diese Weise besonders einfach von der Steuerungseinheit ermittelt werden, ob bei einem bestehenden, gespeicherten Rezept, gemäß dem eine Speise teilautomatisiert zubereitet wird oder werden soll, von den Vorgaben des Rezept und/oder der Rezeptschritte abgewichen werden kann, um Energie zu sparen und dennoch zu einem gleichwertigen Kochergebnis zu gelangen. Die in dieser Ausführungsform und anderen Ausführungsformen beschriebenen Bedingungen sind insbesondere als Analysekriterium bzw. Analysekriterien hinterlegt.

Ein gespeichertes Rezept enthält eine Mehrzahl von Rezeptschritten in Form von digitalen Daten und/oder eine Information hinsichtlich einer Reihenfolge der Rezeptschritte. In einer Ausgestaltung können mehrere, alternative Reihenfolgen und/oder Bedingungen für eine zu ermittelnde Reihenfolge der Rezeptschritte als Informationen in dem Rezept enthalten sein, beispielsweise für ein paralleles Zubereiten einer Speise auf der Küchenmaschine und einem weiteren Nahrungsmittelbearbeitungsgerät wie z.B. einer zweiten Küchenmaschine, Mixer, Ofen oder Pfanne. Jeder Rezeptschritt enthält Steuerdaten und/oder Steuerbefehle, die insbesondere von der Steuereinheit verarbeitet werden, um eine oder mehrere elektrisch betreibbare Funktionskomponenten der Küchenmaschine (z.B. das drehbare Werkzeug bzw. dessen antreibenden Elektromotor und/oder das Heizelement etc.) sowie das Display und/oder eine Verriegelungseinrichtung oder ähnliche Einrichtungen der Küchenmaschine entsprechend zu steuern und betreiben. Die Steuerungseinheit hat Zugriff auf ein oder mehrere elektronisch gespeicherte Rezepte, die in der Steuerungseinheit selbst und/oder extern (also räumlich getrennt von der Küchenmaschine) in einer Datenbank gespeichert sind. Im folgenden wird ein gespeichertes Rezept, das vom Benutzer zum teilautomatisierten Zubereiten mithilfe der Küchenmaschine ausgewählt und/oder zum Durchführen vorgesehen wurde, aktuelle durchgeführtes Rezept genannt.

Teilautomatisiert bedeutet, dass Teile des Rezeptes, ganze Rezeptschritte oder Teile von Rezeptschritten während der teilautomatisierten Speisenzubereitung gemäß einem gespeicherten (aktuellen) Rezepts mithilfe der Küchenmaschine automatisiert und/oder maschinenbetrieben von der Küchenmaschine oder einem von der Küchenmaschine gesteuerten, externen Gerät durchgeführt werden. Teilautomatisiert bedeutet somit ebenfalls, dass Teile des Rezepts oder von Rezeptschritten manuell von dem Benutzer durchgeführt werden, wie z.B. das Zufügen eines Nahrungsmittels und/oder Zutaten in das Speisenzubereitungsgefäß. Insbesondere bestätigt der Benutzer manuell (z.B. mithilfe des Touchscreen-Displays) das Fertigstellen eines Rezeptschrittes, so dass der nächste Rezeptschritt gestartet wird. Ein Beispiel für ein automatisiert und/oder maschinenbetriebenen Teil eines Rezeptes oder Rezeptschrittes ist das Mischen oder Zerkleinern durch das Werkzeug oder das Erhitzen durch das Heizelement. Ein Garen wird in dieser Anmeldung auch Kochen genannt und beinhaltet ein Erhitzen eines Nahrungsmittels oder einer Speise, und zwar mit einer Temperatur und für eine hinreichende Dauer, damit das Nahrungsmittel bzw. die Speise nicht mehr den Zustand eines rohen Lebensmittels aufweisen. Insbesondere wird bei einem Garen bzw. Kochen eine Flüssigkeit eingesetzt, insbesondere Wasser. Beispielsweise kann die Flüssigkeit das Nahrungsmittel bedeckt, unter dem Nahrungsmittel zum Zwecke des Dämpfens (Dampfgaren) angeordnet sein. Insbesondere schlägt ein Rezeptschritt eine Soll-Temperatur und/oder Soll-Drehzahl über die Benutzerschnittstelle dem Benutzer vor und/oder der Benutzer stellt die Soll-Temperatur und/oder Soll-Drehzahl manuell über die Benutzerschnittstelle ein. Vorzugsweise wird die empfohlene Einstellung für den Benutzer markiert. In einer alternativen oder ergänzenden Ausgestaltung stellt der Rezeptschritt die Soll-Temperatur und/oder Soll-Drehzahl direkt ein, ohne dass der Benutzer eine unmittelbare Eingriffsmöglichkeit erhält. Einer der Rezeptschritte eines Rezepts kann ausschließlich Aufforderungen an den Benutzer über die Benutzerschnittstelle zum Durchführen von angezeigten Schritten oder Maßnahmen beinhalten, beispielsweise das Entleeren des Speisenzubereitungsgefäßes und Backen in dem Backofen für eine vorgegebene Zeitdauer. Einer der Rezeptschritte eines Rezepts kann ausschließlich vollautomatisierte Vorgänge beinhalten, wobei der Benutzer lediglich den Beginn und/oder das erfolgreiche Fertigstellen dieses Vorgangs über die Benutzerschnittstelle bestätigt, wie z.B. das Dampfgaren für eine vordefinierte Zeit.

In einer Ausführungsform ist die Steuerungseinheit so konfiguriert, dass von den Rezeptschritten des Rezepts abgewichen wird, damit das mindestens eine Nahrungsmittel vor einem Garvorgang zerkleinert wird, wenn das Rezept ein Pürieren eines gegarten Nahrungsmittels vorsieht. Ein gleichwertiges Kochergebnis kann so mit reduziertem Stromverbrauch der Küchenmaschine erzielt werden.

In einer Ausführungsform ist die Steuerungseinheit so konfiguriert, dass von den Rezeptschritten des Rezepts abgewichen wird, damit das mindestens eine Nahrungsmittel vor einem Garvorgang zerkleinert wird, wenn das Rezept die Zubereitung einer Suppe als Speise vorsieht. Ein gleichwertiges Kochergebnis kann so mit reduziertem Stromverbrauch der Küchenmaschine erzielt werden.

In einer Ausführungsform ist die Steuerungseinheit so konfiguriert, dass von den Rezeptschritten des Rezepts abgewichen wird, damit das mindestens eine Nahrungsmittel vor einem Garvorgang zerkleinert wird, wenn das Rezept ein Garen und anschließendes Zerkleinern von mindestens einem der folgenden Nahrungsmittel vorsieht: Knollengemüse, Pilze, Kohlgewächse, Fleisch und Fisch sowie rote Beete und Spinat. Ein gleichwertiges Kochergebnis kann so mit reduziertem Stromverbrauch der Küchenmaschine erzielt werden. Knollengemüse beinhalten essbare Wurzeln oder essbare Knollen, also alle essbaren, unterirdischen Pflanzenteile mit Wurzeln oder Knollen. Insbesondere beinhalten Knollengemüse mindestens eine der Folgenden: Schwarzwurzel, Pastinaken, Knollensellerie, Kartoffeln, Möhre, Karotte, Radieschen, Rettich und/oder Kohlrabi. Insbesondere beinhalten Kohlgewächse mindestens eine der Folgenden: Brokkoli, Weißkohl, Rotkohl, Wirsing, Blumenkohl, Rosenkohl, Chinakohl und/oder Grünkohl. Insbesondere ist das Fleisch ein Kochfleisch, also mit Wasser gekochtes oder gedämpftes Fleisch und/oder Fleisch, das gemäß dem Rezept nicht gebraten wird. Insbesondere ist ein Analysekriterium in Form einer Liste von Nahrungsmitteln vorgesehen.

In einer Ausgestaltung sind die Steuerungseinheit oder ein Korrekturdatensatz so konfiguriert, dass nach dem Garen nicht mehr zerkleinert wird. Ein qualitativ hochwertiges Kochergebnis kann so mit weniger Energieeinsatz erzielt werden.

In einer Ausgestaltung ist die Steuerungseinheit so konfiguriert und/oder mindestens ein Analysekriterium so festgelegt, dass kein Verändern des Ablaufs der Speisenzubereitung verglichen mit dem aktuellen Rezept und/oder kein Abweichen vom Rezept oder einem Rezeptschritt erfolgt, um das mindestens eine Nahrungsmittel vor einem Garvorgang zu zerkleinern oder mit einer höheren Drehzahl zu zerkleinern, wenn gemäß dem Rezept das mindestens eine Nahrungsmittel in der fertiggestellten Speise eine weiche Konsistenz hat, die geringer als bissfest ist, und gleichzeitig eine Scheibenform oder mindestens fingerbreite Stückgröße aufweisen soll. Insbesondere kann eine Scheibenform durch einen Schneidaufsatz erzeugt werden, der im Folgenden noch erläutert wird. Insbesondere kann eine Scheibenform oder eine fingerbreite Stückgröße im Rahmen der Abarbeitung eines gespeicherten Rezeptes durch Auffordern des Benutzers zum manuellen Zerschneiden eines Nahrungsmittels vor dem Zuführen in das Speisenzubereitungsgefäß erhalten werden.

In einer Ausführungsform umfasst die Steuerungseinheit eine Rezeptanalyse-Einheit für ein Analysieren des Rezepts und ist so konfiguriert, dass das für die Speisenzubereitung durchzuführende Rezept mit einem vordefinierten Analysekriterium oder mehreren vordefinierten Analysekriterien der Rezeptanalyse-Einheit verglichen wird. Ein gleichwertiges Kochergebnis kann so mit reduziertem Stromverbrauch der Küchenmaschine erzielt werden.

In einer Ausführungsform umfasst die Steuerungseinheit eine Korrektur-Einheit für ein Korrigieren des Betriebs des Werkzeugs und/oder des Heizelements verglichen mit der durch das Rezept definierten Weise zum Verarbeiten des mindestens einen Nahrungsmittels, um einen Stromverbrauch der Küchenmaschine zu reduzieren. Der Energieverbrauch kann so reduziert werden. Insbesondere beinhaltet das Korrigieren des Betriebs ein Verändern der Reihenfolge der Rezeptschritte gemäß dem gespeicherten Rezept, ein Hinzufügen eines Rezeptschritte oder Zerkleinerungsvorgangs in einen Rezeptschritt des gespeicherten Rezepts, und/oder ein Verändern eines (oben erwähnten) Verarbeitungsparameters verglichen mit den Vorgaben eines Rezeptschrittes des gespeicherten Rezeptes, das hier dem aktuell durchgeführten oder durchzuführenden Rezepts entspricht.

In einer Ausführungsform ist die Steuerungseinheit so konfiguriert, dass die Korrektur-Einheit korrigierend in den Betrieb der Küchenmaschine eingreift, wenn die Rezeptanalyse-Einheit ermittelt hat, dass das vordefinierte Analysekriterium oder mindestens eines der mehreren vordefinierten Analysekriterien von dem Rezept erfüllt wird. Ein gleichwertiges Kochergebnis kann so mit reduziertem Stromverbrauch der Küchenmaschine erzielt werden. Das Eingreifen entspricht einer Veränderung oder Abweichung im Vergleich zum gespeicherten, aktuellen Rezept.

In einer Ausführungsform erfolgt das korrigierende Eingreifen in den Betrieb der Küchenmaschine gemäß mindestens einem Korrekturdatensatz der Korrektur-Einheit, der dem mindestens einen erfüllten Analysekriterium zugeordnet ist. Ein gleichwertiges Kochergebnis ist so mit weniger Stromverbrauch der Küchenmaschine erzielbar.

In einer Ausgestaltung ist jedem Analysekriterium mindestens ein Korrekturdatensatz zugeordnet. In einer Ausgestaltung ist jedem Analysekriterium jeweils ein Korrekturdatensatz oder mehrere Korrekturdatensätze zugeordnet. In einer Ausgestaltung ist jedem Korrekturdatensatz nur ein Analysekriterium oder mindestens ein Analysekriterium zugeordnet.

In einer Ausgestaltung ist die Steuerungseinheit so konfiguriert, dass einerseits ein zusätzlicher Rezeptschritt für einen Zerkleinerungsvorgang vor einen existierenden Rezeptschritt für einen Garvorgang hinzugefügt wird. Und andererseits wird eine Gardauer des existierenden Rezeptschrittes reduziert. Der Energieverbrauch kann so gesenkt werden.

In einer Ausführungsform ist die Steuerungseinheit so konfiguriert, dass einerseits ein existierender Rezeptschritt für einen Zerkleinerungsvorgang, der gemäß dem Rezept nach einem existierenden Rezeptschritt für einen Garvorgang vorgesehen ist, vor den Rezeptschritt mit dem Garvorgang vorgezogen wird. Und andererseits wird eine Gardauer des existierenden Rezeptschrittes reduziert. Der Energieverbrauch kann so gesenkt werden.

In einer Ausgestaltung ist die Steuerungseinheit so konfiguriert, dass eine geringere Temperatur des Garvorgangs durch eine reduzierte Zieltemperatur des Heizelements während des Garens oder durch ein vorzeitiges Abschalten des Heizelements in Kombination einem anschließenden Rührvorgangs durch das Werkzeug zum Fortsetzen des Garens mit einer Restwärme erfolgt. Der Energieverbrauch kann so gesenkt werden.

In einer Ausführungsform ist die Steuerungseinheit so konfiguriert, dass ein Zerkleinern des mindestens einen Nahrungsmittels vor dem Garvorgang durch das Werkzeug im Speisenzubereitungsgefäße oder durch Anweisen des Benutzers über eine Benutzerschnittstelle der Küchenmaschine zum manuellen Zerkleinern des Nahrungsmittels vor dem Zuführen in das Speisenzubereitungsgefäß erfolgt. Der Energieverbrauch kann so gesenkt werden.

In einer Ausführungsform ist die Steuerungseinheit so konfiguriert, dass ein Zerkleinern des mindestens einen Nahrungsmittels vor dem Garvorgang mithilfe eines Schneidaufsatzes der Küchenmaschine zum Schneiden eines zuzuführenden Nahrungsmittels in Stücke oder Scheiben erfolgt. Wenn der Schneidaufsatz in dem gespeicherten Rezept nicht enthalten ist, sondern durch einen Korrekturdatensatz in die Speisenzubereitung einbezogen wird, um Energie zu sparen, wird zunächst das Vorhandensein eines Schneidaufsatzes durch die Steuerungseinheit anhand hinterlegter Zubehördaten überprüft und/oder beim Benutzer über die Benutzerschnittstelle abgefragt. Falls ein Schneidaufsatz vorhanden ist, wird der Benutzer über die Benutzerschnittstelle dazu aufgefordert, den Schneidaufsatz an dem Speisenzubereitungsgefäß anzubringen und gemäß den in dem Korrekturdatensatz enthaltenen Anweisungen, die ebenfalls über die Benutzerschnittstelle an den Benutzer ausgegeben werden, den Schneidaufsatz einzusetzen.

In einer Ausführungsform ist der Schneidaufsatz so relativ zum Speisenzubereitungsgefäß positioniert, dass das zuzuführende Nahrungsmittel von dem Schneidaufsatz zerkleinert werden kann und in zerkleinerter Form in Richtung des drehbaren Werkzeugs fällt. Vorzugsweise ist die zerkleinerte Form eine Scheibenform oder Stückform. In einer Ausgestaltung wird das Nahrungsmittel durch den Schneidaufsatz geraspelt. Insbesondere wird ein Deckel oder Deckelelement zum Abdecken des Speisenzubereitungsgefäßes durch den Schneidaufsatz ersetzt, der somit das Speisenzubereitungsgefäß von oben abdeckt. Alternativ wird der Schneidaufsatz auf oder oberhalb von dem Deckel oder Deckelelement angeordnet. Insbesondere umfasst der Schneidaufsatz eine Schneidscheibe und/oder eine Führungseinrichtung. Bevorzugt hat die Führungseinrichtung die Form eines länglichen, rohrartigen Körpers, der sich in Richtung der Drehachse des drehbaren Werkzeugs erstreckt und/oder außermittig dazu angeordnet ist. D.h., eine Mittelachse des rohrartigen Körpers hat einen radialen Abstand zur Drehachse des drehbaren Werkzeugs, die vorzugsweise koaxial zur Drehachse der Schneidscheibe ist.

In einer Ausgestaltung hat der Schneidaufsatz einen Behältereinsatz, der unterhalb der Schneidscheibe und/oder innerhalb oder oberhalb des Speisenzubereitungsgefäßes angeordnet ist. Bevorzugt hat der Behältereinsatz eine Vielzahl von Öffnungen, damit ein darin aufgefangenes, zerkleinertes Nahrungsmittel durch Erhitzen von Wasser in dem Speisenzubereitungsgefäß gegart werden kann. Insbesondere ist die Schneidscheibe mit dem drehbaren Werkzeug drehfest gekoppelt, so dass das drehbare Werkzeug die Schneidscheibe für ein Rotieren insbesondere mit derselben Drehgeschwindigkeit antreibt. Vorzugsweise ist die Kopplung formschlüssig und/oder für den Benutzer manuell lösbar, insbesondere durch ein Entnehmen des Schneidaufsatzes von dem Speisenzubereitungsgefäß.

Ein weiterer Aspekt betrifft ein Verfahren zum Zubereiten eines Nahrungsmittels mithilfe einer Küchenmaschine, die umfasst: ein Speisenzubereitungsgefäß, ein Heizelement zum Erhitzen eines Nahrungsmittels in dem Speisenzubereitungsgefäß, ein drehbares Werkzeug zum Mischen und/oder Zerkleinern eines Nahrungsmittels in dem Speisenzubereitungsgefäß und einen Elektromotor zum Rotieren des Werkzeugs. Insbesondere ist eine Steuerungseinheit vorgesehen, die Zugriff auf mindestens ein elektronisch gespeichertes Rezept mit mehreren Rezeptschritten für ein teilautomatisiertes Zubereiten einer Speise mit der Küchenmaschine durch Verarbeiten mindestens eines Nahrungsmittels hat, so dass die Steuerungseinheit durch einen Rezeptschritt der mehreren Rezeptschritte des Rezeptes veranlasst werden kann, das Werkzeug und/oder das Heizelement in einer durch den Rezeptschritt definierten Weise zum Verarbeiten des mindestens einen Nahrungsmittels zu betreiben. Gemäß diesem in diesem Absatz beschriebenen Aspekt sieht das Verfahren (vorzugsweise computerimplementiert mithilfe der Steuerungseinheit) vor, dass das Nahrungsmittel erst zerkleinert und danach gekocht wird. Insbesondere ist ein weiteres Zerkleinern, bei dem das Werkzeug gezielt mit einer Drehzahl und in einer Drehrichtung gedreht wird, um ein eine Stückgröße mindestens eines Nahrungsmittels zu reduzieren, nach dem Kochen - also Garen - nicht mehr vorgesehen. Die Merkmale, Ausgestaltungen, Definitionen und Wirkungen der übrigen Aspekte dieser Anmeldung gelten auch für diesen Aspekt des Verfahrens.

Ein weiterer Aspekt der Erfindung, eine Ausführungsform des oben beschriebenen Aspekts der Küchenmaschine und/oder des Aspekts des oben beschriebenen Verfahrens sieht vor, dass die Steuerungseinheit der Küchenmaschine so konfiguriert ist oder ein entsprechender Verfahrensschritt vorhanden ist, dass das ein Benutzer optional eine ersten Einstellungsmodus oder optional einen zweiten Einstellungsmodus an der Steuerungseinheit aktivieren kann. Insbesondere ist der erste Einstellungsmodus so konfiguriert oder derart, dass der Benutzer durch Aktivieren des ersten Einstellungsmodus global für die Küchenmaschine und/oder für alle Rezepte energiesparend Speisen mit der Küchenmaschine zubereiten kann, also mit reduziertem Stromverbrauch der Küchenmaschine. Vorzugsweise sind alle Rezepte das aktuelle ausgewählte Rezept und/oder alle zukünftig ausgewählten Rezepte, solange der erste Einstellungsmodus aktiv ist und/oder solange der erste Einstellungsmodus vom Benutzer nicht deaktiviert wird. Insbesondere ist der zweite Einstellungsmodus so konfiguriert oder derart, dass der Benutzer durch Aktivieren des ersten Einstellungsmodus nur für das aktuell ausgewählte Rezept energiesparend die Speise mit der Küchenmaschine zubereiten kann. Bei dem ersten Einstellungsmodus bzw. bei dem zweiten Einstellungsmodus erfolgt die energiesparende Speisenzubereitung mit der Küchenmaschine dann mit der in dieser Anmeldung beschriebenen Lösung, so dass der Stromverbrauch der Küchenmaschine reduziert wird. Insbesondere erfolgt ein Aktivieren und/oder Deaktivieren des ersten Einstellungsmodus und/oder zweiten Einstellungsmodus durch den Benutzer über die Benutzerschnittstelle. Alternativ oder ergänzend erfolgt das Aktivieren und/oder Deaktivieren mithilfe eines Befehls, der in dem digitalen Rezept enthalten ist, z.B. wenn ein Rezept nicht für die energiesparende Zubereitung geeignet ist. Vorzugsweise triggert das Aktivieren des ersten Einstellungsmodus und/oder zweiten Einstellungsmodus die Rezeptanalyse-Einheit, die Korrektur-Einheit und/oder mindestens eine der oben beschriebenen Ausführungsformen, die ein Abweichen von den Rezeptschritten des Rezeptes vorsehen, beispielsweise damit das mindestens eine Nahrungsmittel vor einem Garvorgang zerkleinert oder mit einer höheren Drehzahl zerkleinert wird und der Garvorgang mit einer geringeren Gardauer oder Temperatur durchgeführt wird.

Ein weiterer Aspekt der Erfindung betrifft ein Computerprogrammprodukt. Das Computerprogrammprodukt umfasst Befehle, die bei der Ausführung des Programms des Computerprogrammprodukts durch die Steuereinheit diese veranlassen, die Schritte des Verfahrens gemäß dem vorhergehenden Aspekt auszuführen.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Frontansicht einer Küchenmaschine mit Teilquerschnittsansicht im Bereich des Speisenzubereitungsgefäßes;
- Figur 2:: Schematische Darstellung der Verarbeitung eines Rezepts durch die Steuerungseinheit;
- Figur 3:: Exemplarische Illustration mithilfe der Fotos A1, A2, A3, B1, B2, B3 von mindestens einem Nahrungsmittel bzw. einer Speise, die gemäß eines gespeicherten Rezepts und im Vergleich dazu mit einer von dem gespeicherten Rezept abweichenden Weise zum Energiesparen zubereitet wird.

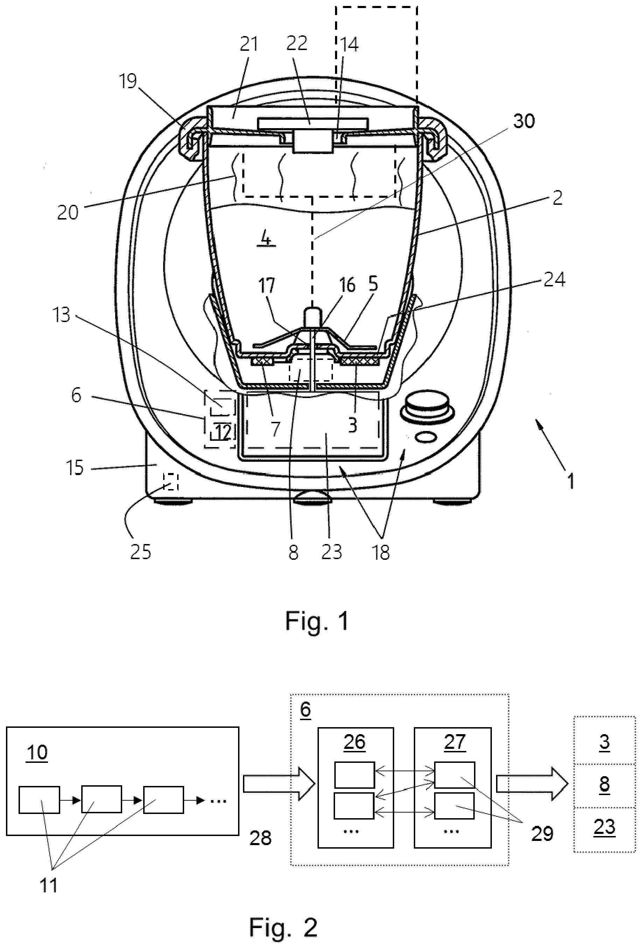

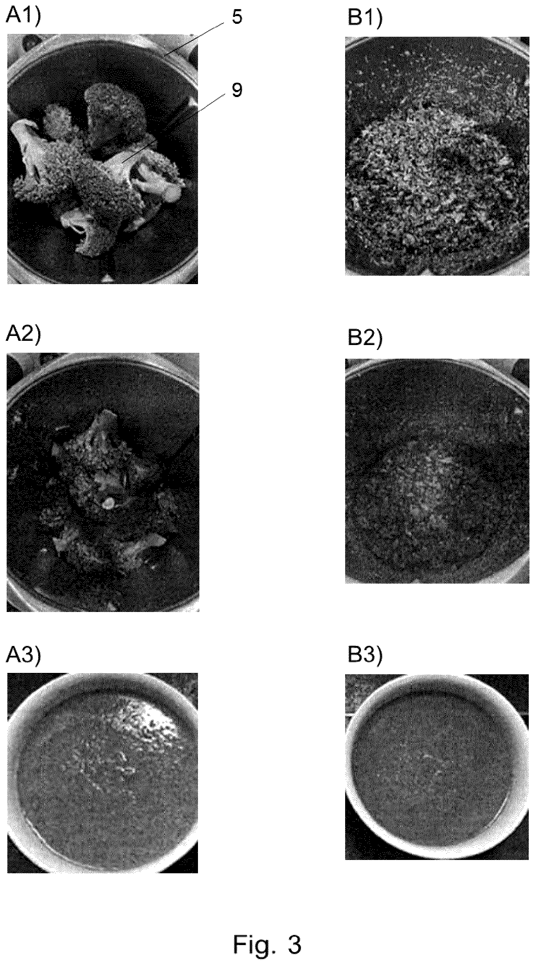

Die Figur 1 zeigt eine Küchenmaschine 1 mit einem Speisenzubereitungsgefäß 2, in dem eine Speise 4 zubereitet wird. Exemplarisch gezeigt wird beispielsweise eine Suppe als Speise 4. Die Speise 4 kann beispielsweise im Wesentlichen aus dem Nahrungsmittel 9 Brokkoli - wie in Fig. 3 gezeigt - und Wasser zubereitet sein. Optional können weiteren Nahrungsmittel 9 und/oder Gewürzen insbesondere im gespeicherten Rezept 10 (vgl. Fig. 2) vorgesehen sein. Durch ein Heizelement 3 wird das Nahrungsmittel 9 bzw. die Speise 4 erhitzt und die Temperatur der Speise 4 durch den Temperatursensor 7 gemessen und ein entsprechendes Signal zu Ermittlung der Ist-Temperatur an eine Steuerungseinheit 6 übermittelt. Einem drehbares Werkzeug 5 zum Mischen und/oder Zerkleinern der Speise 4 in dem Speisenzubereitungsgefäß 2 wird durch einen Elektromotor 8 angetrieben.

In einer Ausgestaltung hat das Werkzeug 5 ein oder mehrere, radial abstehende Arme, bevorzugt vier Arme. Vorzugsweise hat mindestens ein Arm des Werkzeugs 5 eine Schneide. Bevorzugt zeigt die Schneide in eine erste Drehrichtung des Werkzeug 5 und/oder in die andere Drehrichtung ist der Arm stumpf. Bevorzugt kann das Werkzeug 5 - insbesondere unabhängig von der Drehrichtung - bei niedrigen Drehzahl von z.B. bis zu 100 oder 200 Umdrehungen pro Minute zum Mischen ohne ein nennenswertes Zerkleinern betrieben werden. Bei flüssigen Speisen mit einem überwiegenden Flüssigkeitsanteil wie z.B. bei Suppe kann ein Mischen ohne ein nennenswertes Zerkleinern von festen Bestandteilen bis insbesondere 500 Umdrehungen pro Minute erfolgen. In einer Ausgestaltung wird beim Erhitzen durch das Heizelement 3 stets das Werkzeug mit einer Drehzahl von ungefähr 100 Umdrehungen pro Minute zum Mischen und in Bewegung halten des Nahrungsmittels 9 bzw. der Speise 4 zum Vermeiden eines Anbrennens und zum verbesserten Verteilen der Hitze in der Speise betrieben. Insbesondere erfolgt ein gezieltes Zerkleinern eines Nahrungsmittels 9 oder einer Speise durch Ansteuern des Elektromotors 8 zum Drehen des Werkezeugs 5 mit einer Drehzahl von mindestens 1000 Umdrehungen pro Minute und/oder höchstens 12000 Umdrehungen pro Minute. Bei stückigen Nahrungsmitteln 9 mit bissfester Konsistenz oder Speisen 4 mit dergleichen Nahrungsmitteln 9 kann ein Zerkleinern bereits gezielt durch eine Drehzahl des Werkzeugs 5 von ungefähr oder mindestens 500 Umdrehungen pro Minute durchgeführt werden.

Der Elektromotor 8 treibt eine Antriebswelle 16 an, die sich durch eine Gefäßdurchführung 17 im Bodenbereich 24 des Speisenzubereitungsgefäßes 2 ins Innere des Speisenzubereitungsgefäßes 2 erstreckt und/oder das im Bodenbereich 24 des Speisenzubereitungsgefäßes 2 angeordnete Werkzeug 5 rotiert. Ein Deckel in Form eines Deckelelements 21 deckt die offene Oberseite des Speisenzubereitungsgefäßes 2 ab. In einer Ausgestaltung ist das einen Deckel bildende Deckelelement 21 geschlossen und hat eine Vielzahl von Deckelöffnungen 14 mit einem Durchmesser oder eine Schlitzbreite von kleiner als einem halben Zentimeter zum Auslassen von Dampf 20, so dass ein Nahrungsmittel 9 oder andere Zutaten nur durch ein Öffnen des Deckels 21 in das Speisenzubereitungsgefäß 2 zugegeben werden können. In einer anderen Ausgestaltung hat das erste Deckelement 21, das auf dem Speisenzubereitungsgefäß 2 aufliegt und überwiegend abdeckt, eine mittige Deckelöffnung 14 zum Einfügen eines Nahrungsmittels oder anderer Zutaten in das Speisenzubereitungsgefäß 2, wobei für das Einfügen ein separates, zweites Deckelelement 22 von der Deckelöffnung 14 wegzubewegen ist, dass die Deckelöffnung 14 abdeckt und/oder lose darauf aufliegt. In einer Ausgestaltung wird das Speisenzubereitungsgefäß 2 von einem Schneidaufsatz 30 abgedeckt (mit gestrichelten Linien als optionale Variante in Fig. 1 illustriert).

Insbesondere ist der Schneidaufsatz 30 so eingerichtet, dass eine nicht gezeigte Schneidscheibe mit dem Werkzeug 5 oder der Antriebsachse 16 zum Rotieren der Schneidscheibe gekoppelt ist. Insbesondere ist eine Schneidscheibe im oberen Bereich des Speisenzubereitungsgefäßes 2 oder darüber angeordnet und/oder zum Drehen um eine Achse eingerichtet, die koaxial und/oder parallel zur Antriebsachse 16 oder einer Drehachse des Werkzeugs 5 orientiert ist. Ein Nahrungsmittel 9 kann somit (von oben) außermittig zur Achse, um die die Schneidscheibe rotiert, zugeführt werden, so dass Scheiben mit einer im Wesentlichen reproduzierbaren Dicke, Stücke mit einer einstellbaren Größe oder durch die Schneidscheibe geraspeltes Schnittgut durch die Gravitationskraft nach unten in Richtung des Werkzeugs 5 fällt. Eine Scheibendicke oder Stückgröße kann insbesondere durch einen auf das Nahrungsmittel 9 ausgeübten Druck (von oben) beim Zuführen zur Schneidscheibe, durch eine Zufuhrgeschwindigkeit des Nahrungsmittels zur Schneidscheibe und/oder durch eine Drehzahl der Schneidscheibe beeinflusst oder eingestellt werden. Vorzugsweise wird ein mindestens bissfestes Stück Nahrungsmittel - vorzugsweise eins nach dem anderen separat - der Schneidscheibe bevorzugt von oben und/oder in geführter Weise der Schneidscheibe zugeführt. Besonders bevorzugt ist eine Scheibendicke über eine Benutzerschnittstelle 18 der Küchenmaschine 1 durch den Benutzer, einen Rezeptschritt oder einen Korrekturdatensatz einstellbar oder auswählbar. In einer Ausführungsform stellen die eine oder mehreren Deckelvarianten und/oder der Schneidaufsatz unterschiedliche Zubehörvarianten der Küchenmaschine dar, die je nach Bedarf und/oder Verfügbarkeit zum Abdecken des Speisenzubereitungsgefäßes vom Benutzer ausgetauscht, angebracht und/oder entfernt werden können.

Eine Verriegelungseinrichtung 19 ist vorgesehen, um das erste Deckelelement 21 und/oder den Schneidaufsatz 30 - insbesondere am oberen Rand - am Speisenzubereitungsgefäß 2 zu fixieren. Das Speisenzubereitungsgefäß 2 kann vom Benutzer manuell mit einem Gehäuse 15 der Küchenmaschine 1 entnommen und wieder damit verbunden werden, derart, dass im verbundenen Zustand ein Nahrungsmittel 9 oder eine Speise 4 in dem Speisenzubereitungsgefäß 2 durch das Heizelement 3 erhitzt und durch das Werkzeug 5 gemischt oder zerkleinert werden kann. Insbesondere ist der Elektromotor 8, der das Werkzeug 5 antreibt, im Gehäuse 15 integriert. In einer Ausgestaltung ist das Heizelement 3 im Bodenbereich 24 des Speisenzubereitungsgefäß 2 integriert oder angeordnet.

Eine Steuerungseinheit 6 der Küchenmaschine 1 ist mit einem Prozessor 13 und einem Speicher 12 ausgestattet, die insbesondere im Gehäuse 15 integriert sind. Vorzugsweise wird ein zur geplanten Speisenzubereitung vorgesehenes oder ausgewähltes Rezept, auch aktuelles Rezept genannt, zumindest teilweise in einen Arbeitsspeicher des Speichers 12 geladen, um vom Prozessor 13 verarbeitet zu werden. Der Speicher 12 kann zudem eine Festplatte zum Speichern von mehreren Rezepten enthalten. Die Steuerungseinheit 6 kann insbesondere auf Rezepte zugreifen, die auf einer externen Rechnereinheit (z.B. Server, Cloud-PC oder Smartphone) gespeichert sind. In einem Aspekt oder einer Ausführungsform ist die Küchenmaschine 1 als ein System ausgeführt, dessen Steuerungseinheit 6 zumindest teilweise und/oder mithilfe einer drahtlosen Kommunikationsverbindung auf eine externe Rechnereinheit ausgelagert ist.

Das Gehäuse 15 umfasst mindestens einen Gewichtssensor 25, bevorzugt einen Gewichtssensor 25 in einem Standfuß oder allen Standfüßen, wie in Fig. 1 illustriert. Eine Benutzerschnittstelle 18 ist am Gehäuse 15 vorgesehen und/oder umfasst ein Display, insbesondere ein Touchscreen-Display 23 mit Bildzeichen zum Betätigen durch den Benutzer. Die Benutzerschnittstelle 18 kann alternativ oder ergänzend einen manuellen Bedienschalter aufweisen, insbesondere einem Drehknopf. Insbesondere können über das Display Handlungsanweisungen an einen Benutzer gemäß eines Rezeptschrittes 11 eines Rezeptes 10 gegeben werden, auf die in Fig. 2 näher eingegangen werden. Eine Soll-Temperatur (für das Heizelement 3) und/oder eine Soll-Drehzahl (für das Werkzeugs 5) können von dem Rezept 10, einem Rezeptschritt 11 des Rezepts 10 vorgegeben werden, auf Basis dessen die Steuerungseinheit 6 das Heizelement 3 bzw. den Elektromotor 8 steuert. Es ist auch insbesondere über die Benutzerschnittstelle 18 (bevorzugt das Touchscreen-Display 23 oder einen Drehknopf) möglich, dass die Steuerungseinheit 6 eine vorgegebene Soll-Temperatur oder Soll-Drehzahl von einem Benutzer erhält oder eine von einem Rezeptschritt 11 voreingestellte Soll-Temperatur oder Soll-Drehzahl vom Benutzer angepasst wird. Zum Steuern des Heizelements 3 und/oder des Elektromotors 8 dient insbesondere ein Signal mit einer bestimmten, elektrischen Stromstärke, Spannung oder Leistung zum Versorgen und Betreiben des Heizelement 3 und/oder des Elektromotors 8. Vorzugsweise dient eine mithilfe des Temperatursensors 7 erfasste Ist-Temperatur und/oder ein von der Steuerungseinheit 6 ermittelte Ist-Drehzahl zur Regelung der Temperatur bzw. Drehzahl zum Erzielen der entsprechenden Soll-Werte.

Die Figur 2 zeigt schematisch den Aufbau eines gespeicherten Rezeptes 10 mit mehreren Rezeptschritten 11 sowie einer Information hinsichtlich der Reihenfolge der Rezeptschritte 11 und/oder zur Bestimmung der Reihenfolge durch die Steuerungseinheit in Abhängigkeit von vordefinierten Parametern, wie z.B. die Verfügbarkeit von weiteren Geräten zur Nahrungsmittelverarbeitung.

Zu Beginn und/oder während der Durchführen eines gespeicherten Rezepts 10 durch die Küchenmaschine 1 prüft und ermittelt eine Rezeptanalyse-Einheit 26 der Steuerungseinheit 6, ob ein Analysekriterium 28 insbesondere von mehreren vordefinierten Analysekriterien 28 von dem Rezept 10 erfüllt wird.

Wenn mindestens ein Analysekriterium 28 identifiziert wurde, dessen festgelegte Bedingung oder Bedingungen von dem Rezept 10 erfüllt werden, erfolgt durch einen Korrektur-Einheit 27 der Steuerungseinheit 6 eine Identifizierung eines Korrekturdatensatzes 29 oder mehrerer Korrekturdatensätze 29 gemäß der Zuordnung zu dem erfüllten Analysekriterium 28 bzw. den erfüllten Analysekriterien 28. Insbesondere ist die Zuordnung in der Korrektur-Einheit 27 hinterlegt oder in den Korrekturdatensätzen 29 enthalten.

Wenn kein Analysekriterium 28 identifiziert wird, dessen festgelegte Bedingung oder Bedingungen von dem Rezept 10 erfüllt werden, erfolgt ein Fortsetzen des Speisenzubereitungsvorgangs gemäß dem gespeicherten Rezept 10. Ein Verändern, Eingreifen oder Abwandeln gemäß eines Korrekturdatensatzes 29 erfolgt dann nicht.

In beiden Fällen (ein erfülltes Analysekriterium 28 liegt vor oder liegt nicht vor) wird der Speisenzubereitungsvorgang fortgesetzt und Funktionskomponenten wie das durch den Elektromotor 8 angetriebene Werkzeug 5 zum Mischen oder Zerkleinern und das Heizelement 3 zum Erhitzen sowie das Touchscreen-Display 23 werden von der Steuerungseinheit 6 angesteuert. Wenn kein erfülltes Analysekriterium 28 vorliegt, erfolgt das Steuern der Funktionskomponenten gemäß den Vorgaben des Rezepts 10. Wenn ein erfülltes Analysekriterium 28 vorliegt, erfolgt das Steuern der Funktionskomponenten zusätzlich durch die Vorgaben des mindestens einen Korrekturdatensatzes 29, die Teile der Vorgaben des Rezeptes 10 ersetzen oder modifizieren. Insbesondere werden die modifizierten Vorgaben von der Korrektur-Einheit 27 (anhand eines zugeordneten Korrekturdatensatzes 29) ermittelt.

In einer Ausgestaltung wird ein Rezept in einer angepassten Weise durch die Küchenmaschine 1 zur Reduktion seines Energieverbrauches ausgeführt.

Insbesondere ist mindestens eine der folgenden Eingriffe, Anpassungen, Modifikationen, Veränderungen oder Abweichungen vorzugsweise durch die Korrektur-Einheit 27 und/oder mindestens einen Korrekturdatensatz 29 vorgesehen:
- ein Zerkleinern von Gargut (also eines Nahrungsmittels 9) vor dem Kochen durch eine Drehzahlerhöhung des Werkzeugs 5 (z.B. Universalmesser) der Küchenmaschine 1 oder durch eine Verwendung eines Zusatzgerätes für die Küchenmaschine 1 zum definierten Zerkleinern von Gargut (z.B. den Schneidaufsatz 30).
- ein nachgelagerter Kochvorgang (also ein Erhitzungsvorgang mithilfe des Heizelements 3), welcher aufgrund der vorherigen Zerkleinerung des Garguts entweder verkürzt ist, mit einer geringeren Gartempertur betrieben werden kann oder durch eine vorzeitige Abschaltung des Heizelements 3 der Küchenmaschine 1 in Kombination mit einem Nachlaufen des Werkzeugs 5 den dadurch erhöhten Wärmeübergang (insbesondere bei einer indirekten Erwärmung über Wasser, dass durch das Heizelement erhitzt wird) in Verbindung mit der Restwärme zum Fortgesetzten Garens bei geringerem Gesamtenergieverbrauch nutzt.

Trotz des Energieverbrauchs beim Zerkleinern des Gargutes wird der Energieverbrauch der Küchenmaschine 1 reduziert, da die aufzuwendende Energie für das Zerkleinern des Gargutes vor dem Kochen geringer ist als die aufzuwendende Energie für das Heizen bei nicht zerkleinertem Gargut.

Im Fall der Nutzung eines Zusatzgerätes (z.B. den Schneidaufsatz 30) wird die Garzeit ebenfalls verringert durch gleichmäßig geschnittenes Gargut (z.B. Kartoffelscheiben für Kartoffelg rati n).

Die Fig. 3 illustriert ein Beispiel der Zubereitung einer Brokkoli-Suppe als Speise 4, bei der ein gleiches Kochergebnis mit geringerem Energieverbrauch der Küchenmaschine 1 erzielt wird.

Das gespeicherte Rezept 10 enthält unter anderem folgende Rezeptschritte 11 in der folgenden Reihenfolge:
1. Der Benutzer wird über das Touchscreen-Display 23 dazu aufgefordert, 400 g Brokkoli als das Nahrungsmittel 9 in das Speisenzubereitungsgefäß 5 insbesondere unter Nutzung der integrierten Waagefunktion mithilfe der Gewichtssensoren 25 zu geben (A1);
2. Der Benutzer wird über das Touchscreen-Display 23 dazu aufgefordert, 500 ml Wasser (nicht erhitztes Wasser) in das Speisenzubereitungsgefäß 5 zu geben;
3. Der Benutzer wird über das Touchscreen-Display 23 dazu aufgefordert, die Verarbeitungsparameter 15 Minuten als Soll-Gardauer und 100 °C als Soll-Temperatur und Stufe 1 (z.B. 100 Umdrehungen pro Minute) als Drehzahl des Werkzeugs 5 über das Touchscreen-Display 23 zu bestätigen oder einzustellen sowie nach Durchführen dieses Vorgangs (A2) die Fertigstellung dieses Rezeptschrittes zu bestätigen;
4. Der Benutzer wird über das Touchscreen-Display 23 dazu aufgefordert, die Verarbeitungsparameter 30 Sekunden Bearbeitungszeit und Stufe 8 (z.B. 5800 Umdrehungen pro Minute) als Drehzahl des Werkzeugs 5 zu bestätigen oder einzustellen sowie nach Durchführen dieses Vorgangs die Fertigstellung dieses Rezeptschrittes zu bestätigen.

Die pürierte Suppe ist anschließend fertiggestellt (A3). Diese Speisenzubereitung gemäß dem gespeicherten Rezept 10 benötigt 0,1621 kWh.

Beispielsweise wird durch das oben erläuterte Beispiel eines gespeicherten Rezeptes mindestens eines der folgenden Analysekriterien 28 erfüllt oder von der Rezeptanalyse-Einheit 26 als erfüllt identifiziert:
- Die Speise wird püriert
- Die Speise wird nach dem Garen zerkleinert
- Die Speise ist in einer Liste von Nahrungsmitteln enthalten

Beispielsweise wird durch das Erfüllen mindestens eines der oben erläuterten Beispiele für Analysekriterien 28 die folgenden, entsprechend zugeordneten Korrekturdatensatz 29 insbesondere von der Korrektur-Einheit 27 identifiziert und für die teilautomatisierte Speisenzubereitung mit reduziertem Energieverbrauch durch die Steuerungseinheit 6 umgesetzt:
- Hinzufügen eines zusätzlichen Rezeptschritt zum Zerkleinern vor dem bestehenden Rezeptschritt 11 des Garens in der Reihenfolge der Rezeptschritte 11 (gemäß dem entsprechenden Korrekturdatensatzes 29);
- Verkürzen der Gardauer in dem Rezeptschritt 11 des Garens (gemäß dem entsprechenden Korrekturdatensatzes 29)

Unter Einsatz der Erfindung, das ein Eingreifen, Anpassen, Modifizieren, Verändern und/oder Abweichen vom gespeicherten Rezept 10 realisiert (insbesondere unter Einsatz der Rezeptanalyse-Einheit 26 und der Korrektur-Einheit 27), erfolgt die Speisenzubereitung zum Einsparen von Energie beispielsweise wie folgt und in der folgenden Reihenfolge (also zeitliche Reihenfolge):
1. (gemäß gespeichertem Rezept 10) Der Benutzer wird über das Touchscreen-Display 23 dazu aufgefordert, 400 g Brokkoli als das Nahrungsmittel 9 in das Speisenzubereitungsgefäß 5 insbesondere unter Nutzung der integrierten Waagefunktion mithilfe der Gewichtssensoren 25 zu geben;
2. (gemäß gespeichertem Rezept 10) Der Benutzer wird über das Touchscreen-Display 23 dazu aufgefordert, 500 ml Wasser (nicht erhitztes Wasser) in das Speisenzubereitungsgefäß 5 zu geben;
3. (Zusätzlicher Rezeptschritt 11 gemäß einem angewendeten Korrekturdatensatz 29) Der Benutzer wird über das Touchscreen-Display 23 dazu aufgefordert, die Verarbeitungsparameter 7 Sekunden Bearbeitungszeit und Stufe 5 (z.B. 2000 Umdrehungen pro Minute) als Drehzahl des Werkzeugs 5 zu bestätigen oder einzustellen sowie nach Durchführen dieses Vorgangs (B1) die Fertigstellung zu bestätigen;
4. (entspricht dem ursprünglichen 3. Rezeptschritt des gespeicherten Rezeptes 10, dessen Gardauer auf Basis eines verarbeiteten Korrekturdatensatzes 29 um 3 Minuten reduziert wird) Der Benutzer wird über das Touchscreen-Display 23 dazu aufgefordert, die Verarbeitungsparameter 12 Minuten als Soll-Gardauer und 100 °C als Soll-Temperatur und Stufe 1 (z.B. 100 Umdrehungen pro Minute) als Drehzahl des Werkzeugs 5 über das Touchscreen-Display 23 zu bestätigen oder einzustellen sowie nach Durchführen dieses Vorgangs die Fertigstellung (B2) zu bestätigen;
5. (entspricht dem ursprünglichen 4. Rezeptschritt des gespeicherten Rezeptes 10) Der Benutzer wird über das Touchscreen-Display 23 dazu aufgefordert, die Verarbeitungsparameter 30 Sekunden Bearbeitungszeit und Stufe 8 (z.B. 5800 Umdrehungen pro Minute) als Drehzahl des Werkzeugs 5 zu bestätigen oder einzustellen sowie nach Durchführen dieses Vorgangs die Fertigstellung dieses Rezeptschrittes zu bestätigen.

Die pürierte Suppe ist anschließend fertiggestellt (B3). Diese Speisenzubereitung gemäß dem gespeicherten Rezept 10 benötigt 0,1280 kWh.

Die Energieeinsparung beträgt ca. 21 %. Die Zubereitungszeit konnte zudem um 2,5 Minuten reduziert werden.

## Patentansprüche

1. Küchenmaschine (1) zum Zubereiten einer Speise (4) durch Verarbeiten mindestens eines Nahrungsmittels (9) umfassend ein Speisenzubereitungsgefäß (2), ein Heizelement (3) zum Erhitzen eines Nahrungsmittels (9) in dem Speisenzubereitungsgefäß (2), ein drehbares Werkzeug (5) zum Mischen und/oder Zerkleinern eines Nahrungsmittels (9) in dem Speisenzubereitungsgefäß (2) und einen Elektromotor (8) zum Rotieren des Werkzeugs (5), wobei eine Steuerungseinheit (6) vorgesehen ist, die Zugriff auf mindestens ein elektronisch gespeichertes Rezept (10) mit mehreren Rezeptschritten (11) für ein teilautomatisiertes Zubereiten einer Speise (4) mit der Küchenmaschine (1) hat, so dass die Steuerungseinheit (6) durch einen Rezeptschritt (11) der mehreren Rezeptschritte (11) des Rezeptes (10) veranlasst werden kann, das Werkzeug (5) und/oder das Heizelement (3) in einer durch den Rezeptschritt (11) definierten Weise zum Verarbeiten des mindestens einen Nahrungsmittels (9) zu betreiben, **dadurch gekennzeichnet, dass** die Steuerungseinheit (6) so konfiguriert ist, dass das mindestens eine Nahrungsmittel (9) vor einem Garvorgang zerkleinert wird.

2. Küchenmaschine (1) nach Anspruch 1, **dadurch gekennzeichnet, dass** die Steuerungseinheit (6) so konfiguriert ist, dass von den Rezeptschritten (11) des Rezeptes (10) abgewichen wird, damit das mindestens eine Nahrungsmittel (9) vor einem Garvorgang zerkleinert oder mit einer höheren Drehzahl zerkleinert wird und der Garvorgang mit einer geringeren Gardauer oder Temperatur durchgeführt wird.

3. Küchenmaschine (1) nach dem vorhergehenden Anspruch, **dadurch gekennzeichnet, dass** die Steuerungseinheit (6) so konfiguriert ist, dass von den Rezeptschritten (11) des Rezepts (10) abgewichen wird, damit das mindestens eine Nahrungsmittel (9) vor einem Garvorgang zerkleinert wird, wenn das Rezept (10) vorsieht, ein Nahrungsmittels (9) nach einem Garvorgang zu zerkleinern.

4. Küchenmaschine (1) nach einem der zwei vorhergehenden Ansprüche, **dadurch gekennzeichnet, dass** die Steuerungseinheit (6) so konfiguriert ist, dass von den Rezeptschritten (11) des Rezepts (10) abgewichen wird, damit das mindestens eine Nahrungsmittel (9) vor einem Garvorgang zerkleinert wird, wenn das Rezept (10) ein Pürieren eines gegarten Nahrungsmittels (9) vorsieht.

5. Küchenmaschine (1) nach einem der drei vorhergehenden Ansprüche, **dadurch gekennzeichnet, dass** die Steuerungseinheit (6) so konfiguriert ist, dass von den Rezeptschritten (11) des Rezepts (10) abgewichen wird, damit das mindestens eine Nahrungsmittel (9) vor einem Garvorgang zerkleinert wird, wenn das Rezept (10) die Zubereitung einer Suppe als Speise (4) vorsieht.

6. Küchenmaschine (1) nach einem der drei vorhergehenden Ansprüche, **dadurch gekennzeichnet, dass** die Steuerungseinheit (6) so konfiguriert ist, dass von den Rezeptschritten (11) des Rezepts (10) abgewichen wird, damit das mindestens eine Nahrungsmittel (9) vor einem Garvorgang zerkleinert wird, wenn das Rezept (10) ein Garen und anschließendes Zerkleinern von mindestens einem der folgenden Nahrungsmittel (9) vorsieht: Knollengemüse, Pilze, Kohlgewächse, Fleisch und Fisch.

7. Küchenmaschine (1) nach einem der vorhergehenden Ansprüche, **dadurch gekennzeichnet, dass** die Steuerungseinheit (6) eine Rezeptanalyse-Einheit (26) für ein Analysieren des Rezepts (10) umfasst und so konfiguriert ist, dass das für die Speisenzubereitung durchzuführende Rezept (10) mit einem vordefinierten Analysekriterium (28) oder mehreren vordefinierten Analysekriterien (28) der Rezeptanalyse-Einheit (26) verglichen wird.

8. Küchenmaschine (1) nach einem der vorhergehenden Ansprüche, **dadurch gekennzeichnet, dass** die Steuerungseinheit (6) eine Korrektur-Einheit (27) für ein Korrigieren des Betriebs des Werkzeugs (5) und/oder des Heizelements (3) verglichen mit der durch das Rezept (10) definierten Weise zum Verarbeiten des mindestens einen Nahrungsmittels (9) umfasst, um einen Stromverbrauch der Küchenmaschine (1) zu reduzieren.

9. Küchenmaschine (1) nach den zwei vorhergehenden Ansprüchen, **dadurch gekennzeichnet, dass** die Steuerungseinheit (6) so konfiguriert ist, dass die Korrektur-Einheit (27) korrigierend in den Betrieb der Küchenmaschine (1) eingreift, wenn die Rezeptanalyse-Einheit (26) ermittelt hat, dass das vordefinierte Analysekriterium (28) oder mindestens eines der mehreren vordefinierten Analysekriterien (28) von dem Rezept (10) erfüllt wird.

10. Küchenmaschine (1) nach dem vorhergehenden Anspruch, **dadurch gekennzeichnet, dass** das korrigierende Eingreifen in den Betrieb der Küchenmaschine (1) gemäß mindestens einem Korrekturdatensatz (29) der Korrektur-Einheit (27) erfolgt, der dem mindestens einen erfüllten Analysekriterium (28) zugeordnet ist.

11. Küchenmaschine (1) nach einem der vorhergehenden Ansprüche, **dadurch gekennzeichnet, dass** die Steuerungseinheit (6) so konfiguriert ist, dass einerseits ein zusätzlicher Rezeptschritt (11) für einen Zerkleinerungsvorgang vor einen existierenden Rezeptschritt (11) für einen Garvorgang hinzugefügt wird, und andererseits eine Gardauer des existierenden Rezeptschrittes (11) reduziert wird.

12. Küchenmaschine (1) nach einem der vorhergehenden Ansprüche, **dadurch gekennzeichnet, dass** die Steuerungseinheit (6) so konfiguriert ist, dass einerseits ein existierender Rezeptschritt (11) für einen Zerkleinerungsvorgang, der gemäß dem Rezept (10) nach einem existierenden Rezeptschritt (11) für einen Garvorgang vorgesehen ist, vor den Rezeptschritt (11) mit dem Garvorgang vorgezogen wird, und andererseits eine Gardauer des existierenden Rezeptschrittes (11) reduziert wird.

13. Küchenmaschine (1) nach einem der vorhergehenden Ansprüche, **dadurch gekennzeichnet, dass** die Steuerungseinheit (6) so konfiguriert ist, dass eine geringere Temperatur des Garvorgangs durch eine reduzierte Zieltemperatur des Heizelements (3) während des Garens oder durch ein vorzeitiges Abschalten des Heizelements (3) in Kombination einem anschließenden Rührvorgangs durch das Werkzeug (5) zum Fortsetzen des Garens mit einer Restwärme erfolgt.

14. Küchenmaschine (1) nach einem der vorhergehenden Ansprüche, **dadurch gekennzeichnet, dass** die Steuerungseinheit (6) so konfiguriert ist, dass ein Zerkleinern des mindestens einen Nahrungsmittels (9) vor dem Garvorgang durch das Werkzeug (5) im Speisenzubereitungsgefäß (2) erfolgt oder mithilfe eines Schneidaufsatzes (30) der Küchenmaschine (1) zum Schneiden eines zuzuführenden Nahrungsmittels (9) in Stücke oder Scheiben erfolgt.

15. Küchenmaschine (1) nach dem vorhergehenden Anspruch, **dadurch gekennzeichnet, dass** der Schneidaufsatz (30) so relativ zum Speisenzubereitungsgefäß (2) positioniert ist, dass das zuzuführende Nahrungsmittel (9) von dem Schneidaufsatz (30) zerkleinert werden kann und in zerkleinerter Form in Richtung des drehbaren Werkzeugs (5) fällt.
